# EUROPEAN PATENT APPLICATION

(11) **EP 3 263 323 A1**
(43) Date of publication of application: **03.01.2018**
(21) Application number: 17176721.3
(22) Date of filing: 19.06.2017
(51) Int. Cl.: B30B 1/26, B21D 43/02, B30B 15/30

(54) **PRESS MACHINE**

(30) Priority: 24.06.2016 JP 2016125753
(71) Applicant: Aida Engineering, Ltd., Sagamihara-shi, Kanagawa 252-5181 (JP)
(72) Inventor: ITO, Takao, Kanagawa, Kanagawa 252-5181 (JP)
(74) Representative: Hancox, Jonathan Christopher

(57) **Abstract**

An object of the present invention is to provide a press machine capable of performing progressive processing with a simple configuration. The press machine 1 for use in progressive processing includes upper and lower crankshafts 10 and 11 having the same amount of eccentricity and driven in opposite directions with a phase difference of 180 degrees, a slide 12 and a bolster 13 rotatably connected to an eccentric part of the upper crankshaft and an eccentric part of the lower crankshaft, respectively, a parallel maintaining mechanism 14 configured to maintain a parallelism between the slide and the bolster, and a clamp mechanism 15 including an upper clamp attached to the slide and a lower clamp attached to the bolster. The slide and the bolster move toward/away from each other and advance/retreat together along a feed direction of the material in accordance with rotational driving of the upper and lower crankshafts. The clamp mechanism clamps the material to be processed when the slide and the bolster move toward each other and unclamps the material forwardly fed while being clamped when the slide and the bolster move away from each other.

## Description

### Technical Filed

The present invention relates to a press machine. More particularly, it relates to a press machine for use in progressive processing.

### Background Technique

Progressive processing is a method of press-working a coiled material without cutting off the coiled material or coil strip up to the final step. Since it is the most effective method for producing a large number of parts, the progressive processing has been positively used to realize productivity improvement and labor saving.

Generally, in the progressive processing, a material is fed by a roll feeder, etc. In recent years, a system has been adopted in which, using a roll feeder, etc., controlled by CNC (Computer Numerical Control), a slide position of the press machine is detected with a rotary cam or an encoder installed on the press machine, and driving of the roll feeder is turned on/off in a suitable timing in accordance with the motion of the slide. In this system, in a state in which a punch and/or a guide pin of a die is engaged with the material, the material is released from the feeder. During which the punch and/or the guide pin is released from the material, the material is clamped, and feeding of the material is started and then stopped.

Although not for such progressive processing, Patent Document 1 discloses a reduction press in which a material to be rolled, which is to be fed by pinch rolls, is arranged between upper and lower sliders to perform a thickness reduction of the material. Upper and lower crankshafts which rotate with a phase difference of 180 degrees are slidably mounted on the upper and lower sliders of the reduction press, respectively. With this, the upper and lower sliders eccentrically rotate. With the eccentric rotational movements of the sliders, the material is moved in the flow direction while being pressed with the sliders.

Further, although not for the progressive processing, Patent Document 2 describes a press stamping device. This device is characterized in that the device has swinging clamping plates that move symmetrically and oppositely. The clamping plates move toward the outlet side of the device while moving toward each other to deform the work to be processed while advancing it. On the other hand, the clamping plates swing back to move away from the work while moving away from each other.

### Prior Art

### Patent Document

Patent Document 1: Japanese Unexamined Patent Application Publication No. 1999(H11)-169901
Patent Document 2: Japanese Examined Patent Application Publication No. 1971(S46)-5044

### Summary of the Invention

### Problems to be Solved by the Invention

In the progressive processing, in addition to equipment of the entire system, a press machine, and dies, a roll feeder, a control panel for controlling the roll feeder, an operation panel, a rotary encoder, etc., are necessary. Therefore, there is a tendency that the facility installation area becomes large and the facility becomes expensive.

Further, a dedicated roll feeder, etc., are individually driven during the material feed time among the shape forming time and the material feed time of one press cycle. For this reason, the equipment/system is complicated.

Under the circumstance, an object of the present invention is to provide a press machine capable of performing progressive processing with a simple configuration.

### Means for Solving the Problems

(1) A press machine according to the present invention is a press machine for use in progressive processing. The press machine includes upper and lower crankshafts having the same amount of eccentricity and driven in opposite directions with a phase difference of 180 degrees, a slide and a bolster rotatably connected to an eccentric part of the upper crankshaft and an eccentric part of the lower crankshaft, respectively, a parallel maintaining mechanism configured to maintain a parallelism between the slide and the bolster, and a clamp mechanism including an upper clamp attached to the slide and a lower clamp attached to the bolster. The slide and the bolster move toward/away from each other and advance/retreat together in a feed direction of the material in accordance with rotational driving of the upper and lower crankshafts. The clamp mechanism clamps the material to be processed when the slide and the bolster move toward each other and unclamps the material forwardly fed while being clamped when the slide and the bolster move away from each other. Here, the "parallelism between the slide and the bolster" denotes a parallelism between the lower surface of the slide which is an upper die mounting surface and the upper surface of the bolster which is a lower die mounting surface.
(2) In the above-described press machine, it is preferable that the parallel maintaining mechanism be composed of a guidepost or guideposts and that the guidepost connects the slide and the bolster, the guide post being attached to one of the slide and the bolster and slidable with respect to the other of the slide and the bolster.
(3) Further, in the above-described press machine, it is preferable that the clamp mechanism be provided with an upper spring and a lower spring to absorb relative vertical motion between the slide and the bolster, and to provide clamping force for the material. (4) Further, it is preferable that the clamp mechanism be provided with an adjusting mechanism for adjusting a height position for clamping the material to be processed.
(5) In the above-described press machine, it is preferable to further include a temporary holding mechanism for temporarily holding the material which is unclamped.

### Effects of the Invention

(1) In the press machine of the present invention, upper and lower crankshafts having the same amount of eccentricity and arranged with a phase difference of 180 degrees are provided, and the eccentric part of the upper crankshaft and the eccentric part of the lower crankshaft are rotatably connected to the slide and the bolster, respectively. Further, the slide and the bolster are constrained so as to be freely movable up and down by the parallel maintaining mechanism so that they are always maintained in parallel each other.
   For this reason, the slide and the bolster make opposite parallel circular motion with keeping relative parallel state around each rotary center of the crankshaft. That is, in the vertical direction, the slide and bolster relatively move up and down in the opposite direction. However, in the horizontal direction, in the right-left direction in the figure, the slide and bolster move together with each other in the same direction. For example, in cases where the upper crankshaft rotates counterclockwise, the slide and the bolster synchronously move rightward during the crankshaft rotates from a point before the bottom death center by the crankshaft angle of 90 degrees (crankshaft angle 90 degrees) to a point after the bottom dead center by the crankshaft angle of 90 degrees (crankshaft angle: 270 degrees). Next, the slide and the bolster move synchronously leftward during the crankdhaft rotates from the point after the bottom dead center by the crankshaft angle of 90 degrees (crankshaft angle: 270 degrees) to the point before the bottom dead center by the crankshaft angle of 90 degrees via the top dead center. This reciprocating motion is repeated.
   By adopting the clamp mechanism utilizing the lateral movements synchronized with the vertical movements of the slide and the bolster for the press machine, it is possible to perform material clamping, material feeding, and material releasing during one press forming cycle with the press machine alone, which can eliminate the use of a dedicated feeder, a control therefore, rotary cams, etc.
   Further, since the slide and the bolster are rotatably connected to the upper and lower crankshafts, it is not necessary to use connecting rods. For this reason, the height of the press machine can be reduced.
(2) In such a press machine, in cases where the parallel maintaining mechanism is composed of a guidepost, the guidepost connects the slide and the bolster and is attached to one of the slide and the bolster and is slidable with respect to the other of the slide and the bolster only in the direction perpendicular to a plane parallel to the slide and the bolster, the parallelism can be attained with a simple configuration. In addition, the relative position of the upper and lower dies can be secured.
(3) In cases where the clamp mechanism is provided with an upper spring and a lower spring to absorb relative vertical motion between the slide and the bolster, and to provide clamping force for the material, the timing of clamp and unclamp can be selected and the clamp force can be secured. (4)In cases where an adjustment mechanism for adjusting the height position at which the material to be processed is clamped, by adjusting the height, the feed pitch of the material can be arbitrarily adjusted.
(5) Furthermore, in cases where a temporary holding mechanism for temporarily holding the unclamped material is further provided, even after unclamping, the material can be made to stand by at the position by the material holding mechanism. For this reason, it is possible to prevent an occurrence of pitch deviation in multi-step progressive dies.

### BRIEF DESCRIPTION OF THE DRAWINGS

FIG. 1 is a partial cross-sectional view showing a main part of an embodiment of a press machine according to the present invention.
FIG. 2 is a schematic partial cross-sectional view taken along the line A-A in FIG. 1.
FIG. 3A is a schematic process diagram showing the operation of the slide and the bolster (phase: 0 to 90 degrees).
FIG. 3B is a schematic process diagram showing the operation of the slide and the bolster (phase: 90 to 180 degrees).
FIG. 3C is a schematic process diagram showing the operation of the slide and the bolster (phase: 180 to 270 degrees).
FIG. 3D is a schematic process diagram showing the operation of the slide and the bolster (phase: 270 to 0 degrees).
FIG. 4 is a diagram showing motion curves of the slide and the bolster.
FIG. 5A is a front view showing another embodiment, and FIG. 5B is a front view showing still another embodiment.

### EMBODIMENTS FOR CARRYING OUT THE INVENTION

### <First Embodiment>

### "1. Outline of Press Machine"

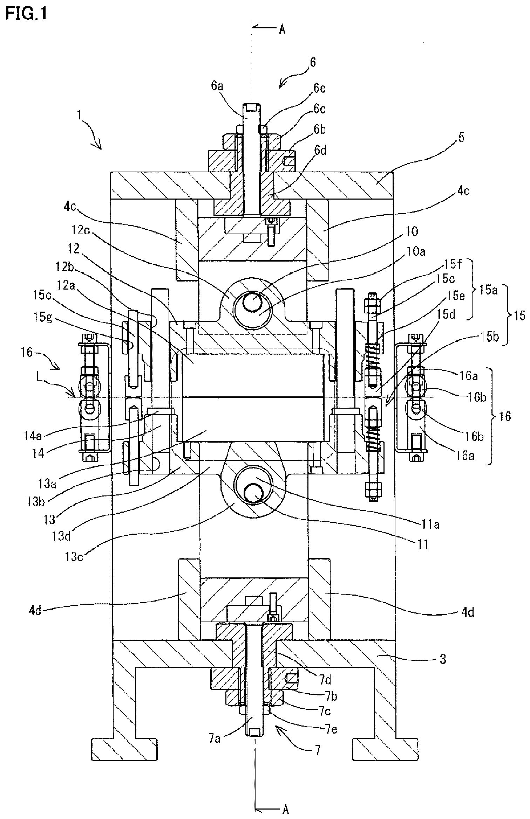

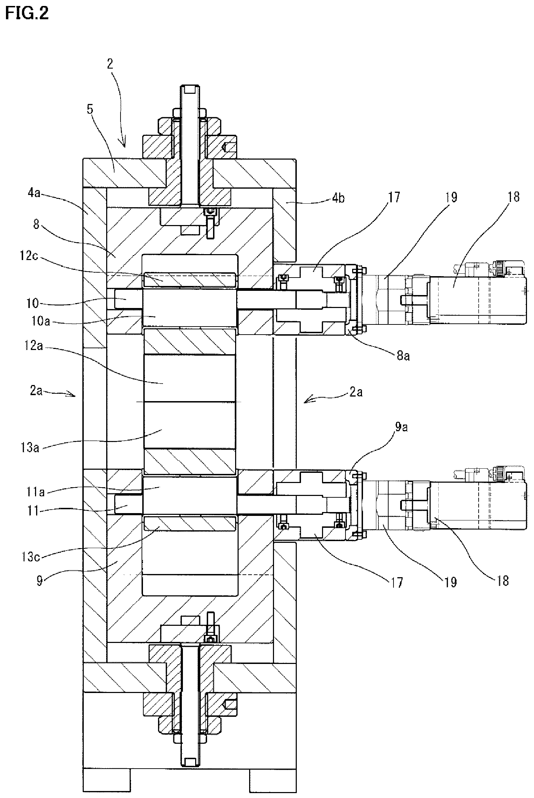

FIG. 1 shows an example of a press machine according to the present invention. This figure shows a state in which dies are closed. Note that a front frame provided on the front side of the press machine is not illustrated. Also note that the front frame 4a is illustrated in FIG. 2.

The press machine 1 is for use in progressive processing, and is provided with a frame body composed of a frame member 2. The frame member 2 includes, for example, a bed 3, the front frame 4a (see FIG. 2) provided on the bed 3, a rear frame 4b (see FIG. 2), right and left upper frames 4c and 4c, right and left lower frames 4d and 4d, and a crown or upper portion 5 provided at the upper ends of the frames 4a, 4b and 4c. A window 2a (see FIG. 2) is formed in the vicinity of the center of each of the front frame 4a and the rear frame 4b, so that the pressing state can be visually recognized and the maintenance of the apparatus can be performed through each window 2a.

Upper and lower die height adjustment mechanisms 6 and 7 are provided above and below the frame member 2, respectively. Upper and lower bearing blocks 8 and 9 are attached to respective tip ends of the die height adjustment mechanisms 6 and 7.

Returning to FIG. 1, opposite end portions (journal portions) of the upper and lower crankshafts 10 and 11 which are driven in opposite rotational directions with a phase difference of 180 degrees are pivotally supported by the respective bearing blocks 8 and 9. Those crankshafts 10 and 11 are eccentric shafts each having an eccentric portion 10a and 11a. The amounts of eccentricities of their eccentric portions (eccentric portions) 10a and 11a are the same.

The eccentric portion 10a of the upper crankshaft 10 and the eccentric portion 11a of the lower crankshaft 11 are rotatably connected to the slide 12 and a bolster 13, respectively. An upper die 12a is attached to the lower surface of the slide 12, and a lower die 13a is attached to the upper surface of the bolster 13.

The above-described die height adjustment mechanisms 6 and 7 are configured to adjust the distance between the bearing blocks 8 and 9 and adjust the distance between the slide 12 and the bolster 13.

The slide 12 and the bolster 13 are provided with guideposts (parallel maintaining mechanism) 14 for maintaining the parallel positional relationship thereof. The guideposts 14 regulate the rotational movements of the slide 12 and the bolster 13 around the respective axes of the upper and lower crankshafts 10 and 11.

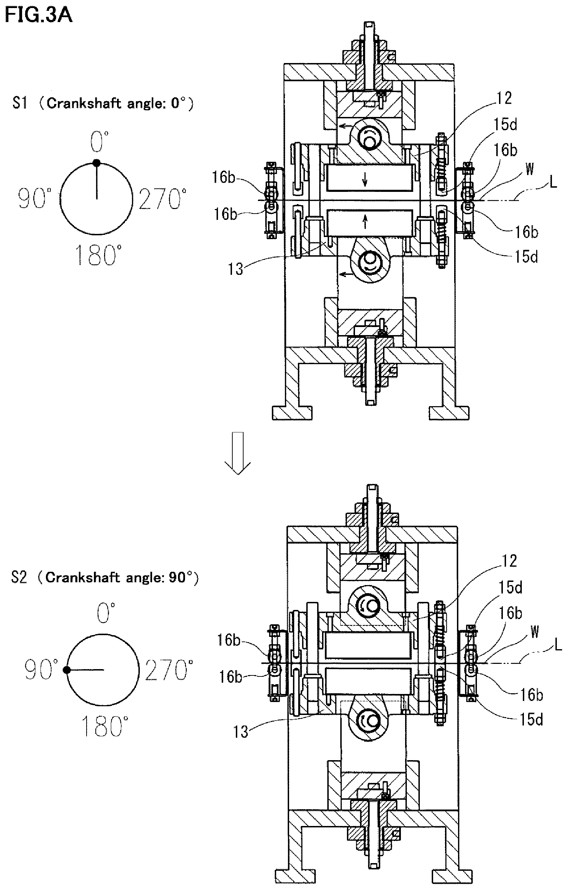

The slide 12 and the bolster 13 are provided with clamp mechanism 15. The clamp mechanism 15 is composed of a pair of upper and lower members configured to hold a material W to be processed with biasing force of springs 15e between 90 degrees and 270 degrees in the phase of the upper crankshaft 10(see FIGs. 3A to 3D). The clamp mechanism 15 is provided on both sides of the slide 12 and the bolster 13 (in the front-back direction along which the material W extends).

On the further outer sides of the clamp mechanisms 15, temporary holding mechanisms 16 and 16 are provided on the right and left end faces of the front frame 4a and the rear frame 4b. The temporary holding mechanisms 16 and 16 temporarily hold the material released (unclamped) by the clamp mechanisms 15 and 15 so as not to move. Each temporary holding mechanism 16 is composed of a pair of upper and lower members.

### "2. Details of Each Portion"

The movements of the upper bearing block 8 in the right-left direction are restricted by the right and left upper frames 4c and 4c. The upper bearing block 8 slides on the inner surfaces of the front frame 4a, the rear frame 4b, and the right and left upper frames 4c and 4c, so that the vertical movements thereof are guided.

As the upper die height adjustment mechanism 6, for example, a screw-nut mechanism is used. The screw member 6a of the mechanism penetrates the crown 5 of the frame member 2, and the vicinity of the lower end thereof is fixed to the upper bearing block 8. Therefore, the screw member 6a cannot rotate. Further, an adjust nut 6d is screwed onto the screw member 6a. The adjust nut 6d penetrates the crown 5, and the outer threaded portion of the upper portion of the adjust nut is screwed into the nut member 6b and also screwed into a lock nut 6c fixing the nut member 6b to the adjust nut 6d. The upper portion 5 is rotatably sandwiched between the lower flange of the adjust nut 6d having a diameter larger than that of the portion penetrating the upper portion 5 of the frame member 2, the nut member 6b, and the lock nut 6c. As a result, the adjust nut 6d, the nut member 6b, and the lock nut 6c are integrated, and restrained in the vertical direction and rotatable with respect to the crown 5. By rotating the nut member 6b, the adjust nut 6d integrated with the nut member 6b can be rotated, so the screw member 6a can be moved up and down. This makes it possible to adjust the die height. After adjusting the height, another locknut 6e is screwed onto the screw member 6a from the above to lock the height position of the screw member 6a.

Since the lower bearing block 9 and the lower die height adjustment mechanism 7 are the same in structure as the upper bearing block 8 and the upper die height adjustment mechanism 6, the description thereof will be omitted.

As shown in FIG. 2, upper and lower servomotors 18 and 18 are connected to the upper and lower crankshafts 10 and 11 via couplings 17 and 17, respectively. The upper and lower servomotors 18 and 18 are fixed to the upper bearing block 8 and the lower bearing block 9 via an upper bearing bracket 8a and a lower bearing bracket 9a, respectively. Between the coupling 17 and the servomotor 18, a decelerator 19 is provided. The decelerator 19 may be fixed using a bracket (not shown) as necessary. Further, even in cases where the servomotor 18 is directly connected to the crankshaft without providing the decelerator 19, the servomotor may be fixed using a bracket.

Returning to FIG. 1, the clamp mechanism 15 is composed of an upper clamp 15a attached to the slide 12 and a lower clamp 15b attached to the bolster 13, and is used as a pair of upper and lower clamps. For this reason, the upper clamp 15a will be described, and the description of the lower clamp 15b will be omitted.

The upper clamp 15a is composed of a rod-like member 15c penetrating the guide hole 15g formed in the slide 12 and slidable in the guide hole 15g in the axial direction, a presser foot 15d covered on the lower end of the rod-like member and the vicinity thereof, a spring 15e for urging the presser foot 15d toward the material side, a pair of nuts 15f screwed onto the male thread of the rod-like member 15c for fixing the height position of the rod-like member 15c with respect to the slide 12. The upper clamp 15a and the lower clamp 15b can absorb vertical motion of the slide 12 and the bolster 13 by virtue of the elastic deformation of the spring 15e, and the upper and the lower presser foots 15d can securely grip the material, i.e. coil strip, by virtue of the urging force of the spring 15e. With the pair of nuts 15f loosened with each other, the rod-like member 15c is moved upward or downward with respect to the slide 12. Then, the pair of nuts 15f are tightened each other. Thus, the position of the pair of nuts 15f with respect to the rod-like member 15c is fixed. This enables the adjustment of the maximum protrusion amount of the presser foot 15d from the slide 12(height position of the lower surface of the presser foot 15d). As the material of the presser foot 15d, for example, hardened steel of carbon steel material (SC material) or the like may be used.

The temporary holding mechanism 16 is composed of a pair of upper and lower members. The temporary holding mechanism 16 is composed of upper and lower support portions 16a and 16a provided on the right and left end faces of the front frame 4a and the rear frame 4b via brackets, and rollers 16b and 16b rotatably provided near the tip ends of the support portions 16a and 16a and the vicinity thereof. With these rollers 16b and 16b, the material W is always sandwiched on the feed line L of the material W. The rollers sandwich the material W so as not to shift even when the clamp mechanism 15 releases the material W, and to guide the flow of the material W in the feed direction when the material is fed forward.

A flange-like portion 14a is provided on the circumferential surface of the guidepost 14 somewhat below the center in the longitudinal direction. The lower part of the guidepost 14 is driven into a fitting hole 13b formed in the bolster 13 and the lower surface of the flange-like portion 14a abuts against the upper surface of the bolster 13 and is fixed thereto. On the other hand, the upper part of the guidepost 14 is slidably fitted in the guide hole 12b formed in the slide 12 from the lower surface side in an upwardly protruded manner.

The slide 12 is suspended by the eccentric portion 10a of the upper crankshaft 10, and the bolster 13 is supported by the eccentric portion 11a of the lower crankshaft 11. The upper crankshaft 10 and the lower crankshaft 11 are rotatably connected to a connecting portion 12c of the slide 12 and a connection portion 13c of the bolster 13, respectively.

### "3. Operation"

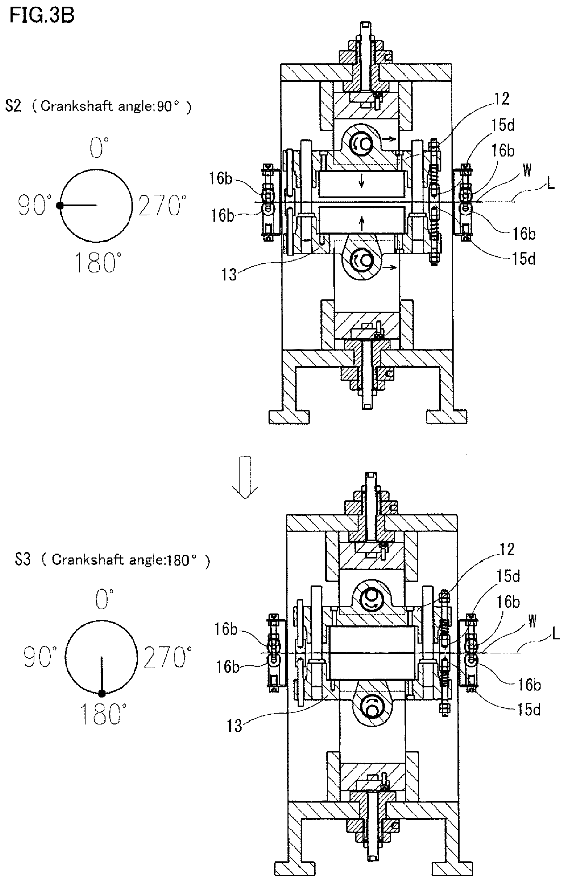

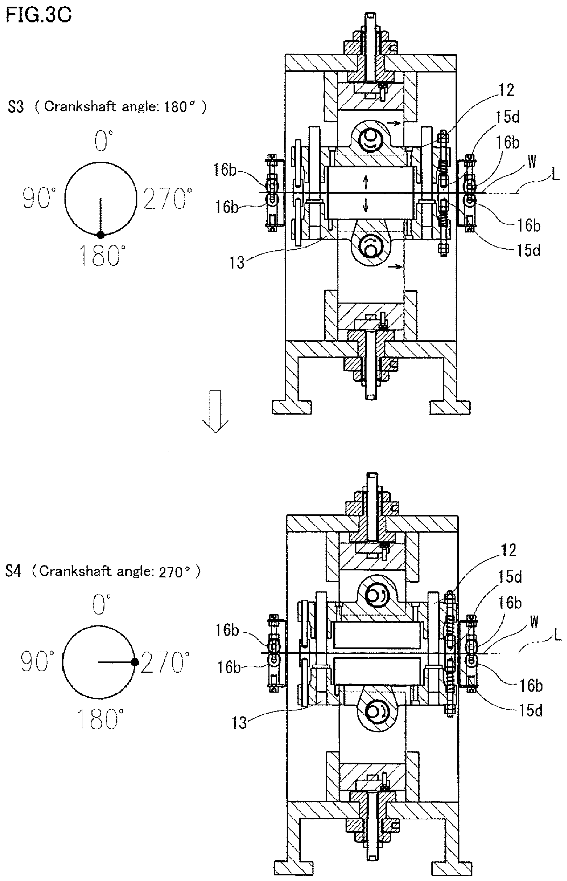

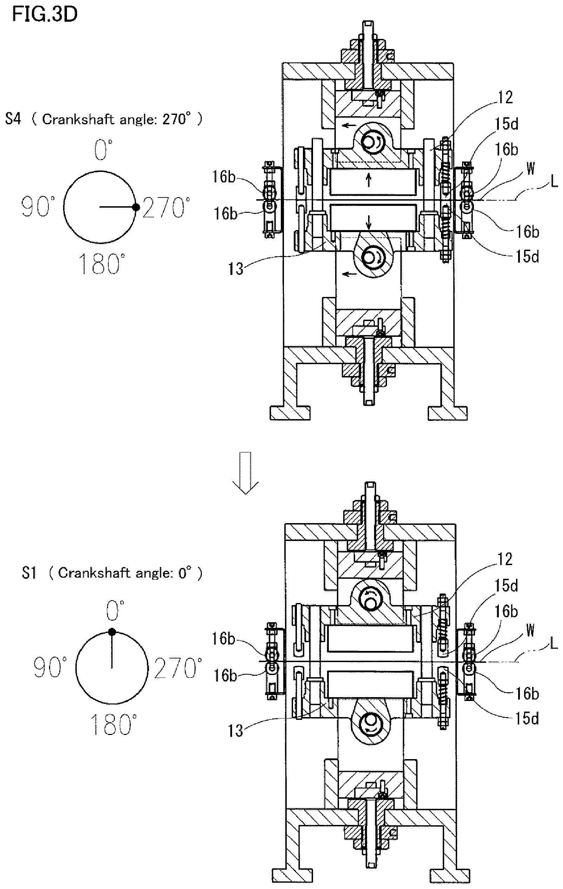

Next, an example of the operation state of the press machine of the present invention will be described with reference to FIG. 3A (hereinafter, the operation state is simply referred to as "S").
(S1): In this state, the phase of the upper crankshaft 10 is 0 degrees, i.e. the top dead center, and the lower crankshaft 11 is 180 degrees, i.e. the bottom dead center. The slide 12 and the bolster 13 are located at the middle position in the right-left direction. Further, the slide 12 and the bolster 13 are separated from each other, and are positioned farthest apart from each other from the feed line L of the material W. That is, the slide 12 and the bolster 13 are separated from each other by twice the amount of eccentricity of the crankshaft vertically from the feed line L of the material W. The upper and lower presser foots 15d and 15d of the clamp mechanism 15 are not clamping the material W. The temporary holding mechanism 16 is clamping the material W with the upper and lower rollers 16b and 16b at the feeding height position.
(S1 to S2): In this state, the phase of the upper crankshaft 10 shifts from 0 degrees to 90 degrees. Both the slide 12 and the bolster 13 move leftward in the figure (rearward in the traveling direction of the material W). Thus, the slide 12 and the bolster 13 move toward each other.
(S2): In this state, as shown in FIG. 3B, the phase of the upper crankshaft 10 is 90 degrees. The slide 12 and the bolster 13 are positioned at the left movement end by being moved leftward from the intermediate position by the amount of eccentricity. Although the slide 12 and the bolster 13 have moved toward with each other, the upper and lower dies 12a and 13a have not yet being brought into contact with each other. On the other hand, the upper and lower presser foots 15d and 15d of the clamp mechanism 15 are clamping the material W. Since the phase is 90 degrees, the moving acceleration of the slide 12 and the bolster 13 in the right-left direction is 0 (zero). For this reason, the clamping of the material W can be performed assuredly. As will be described in detail later, the feed pitch can be changed depending on when clamping is performed.
(S2 to S3): In this state, the phase of the upper crankshaft 10 shifts from 90 degrees to 180 degrees. The material W is being clamped by the clamp mechanism 15. Both the slide 12 and the bolster 13 move rightward in the figure (forward in the traveling direction of the material W). For this reason, the clamped material W also moves forward. Although the slide 12 and the bolster 13 further move toward each other, the upper and lower presser foots 15d and 15d of the clamp mechanism 15 do not further move toward each other since the upper and lower presser foots are clamping the material W. Therefore, the springs 15e and 15e are elastically deformed by the extent that the slide 12 and the bolster 13 further move toward each other. The clamp force is generated by the elastic deformation of the springs 15e.
(S3): In this state, as shown in FIG. 3C, the phase of the upper crankshaft 10 is 180 degrees. The slide 12 and the bolster 13 are located at the middle position in the right-left direction. In the vertical direction, the slide 12 and the bolster 13 are at the bottom dead center and the top dead center, respectively, and the upper and lower dies 12a and 13a are in contact with each other with the material W clamped therebetween. The upper and lower presser foots 15d and 15d of the clamp mechanism 15 is still clamping the material W by the urging force of the springs 15e.
(S3 to S4): In this state, the phase of the upper crankshaft 10 shifts from 180 degrees to 270 degrees. The material W is being clamped by the clamp mechanism 15. Both the slide 12 and the bolster 13 move rightward in the figure (forward in the traveling direction of the material W). For this reason, the clamped material W moves forward. Thus, the slide 12 and the bolster 13 move away from each other. In the clamp mechanism 15, the shrunk of the springs 15e and 15e gradually return to their original state, that is the natural length.
(S4): In this state, as shown in FIG. 3D, the phase of the upper crankshaft 10 is 270 degrees. The slide 12 and the bolster 13 are positioned at the right movement end and moved rightward from the intermediate position by the amount of eccentricity. The slide 12 and the bolster 13 are further separated. The upper and lower presser foots 15d and 15d of the clamp mechanism 15 are just being unclamping the material W. Since the phase is 270 degrees, the moving acceleration of the slide 12 and the bolster 13 in the right-left direction is 0(zero). For this reason, unclamping of the material W can be performed assuredly.
(S4 to S1): In this state, the phase of the upper crankshaft 10 shifts from 270 degrees to 0 degrees. The material W is not clamped by the clamp mechanism 15. Both the slide 12 and the bolster 13 move leftward in the figure (rearward in the traveling direction of the material W) while moving away from each other. As the slide 12 and bolster 13 move away from each other, the presser foots 15d and 15d of the clamp mechanism 15 further move away from each other. The temporary holding mechanism 16 is sandwiching the material W during which the clamp mechanism 15 is in the unclamp state to prevent the material W from being moved.

In this embodiment, the material W is fed during which the phase of the upper crankshaft 10 is between 90 degrees and 270 degrees in which the presser foots 15d and 15d of the clamp mechanism 15 are clamping the material W. The feed amount can be changed by changing the height position of the rod-like member 15c of the clamp mechanism 15, so that the phase of the crankshaft to start the clamping is changed. For example, if the distance between the upper and lower presser foots 15d and 15d relative to the material feed line L is increased, the phase of the upper crankshaft 10 clamping the material W by the presser foots 15d and 15d of the clamp mechanism 15 can be set to 135 degrees to 225 degrees. With this, the feed amount can be reduced.

In this embodiment, when the phase of the upper crankshaft 10 is 90 degrees, the clamp mechanism 15 is in contact with the material W. However, it may be configured such that the upper and lower presser foots 15d and 15d come into contact with the material W before the phase of the upper crankshaft 10 becomes 90 degrees so that the spring 15e is deformed in advance and the spring 15e is deformed sufficiently when the phase becomes 90 degrees so as to give a biasing force (clamping force) capable of assuredly holding the material W. Alternatively, it may be configured such that in order to give a large clamping force with a small deformation of the spring 15e, a spring with a large urging force is used so that a sufficient clamping force can be exerted when the phase of the upper crankshaft 10 is around 90 degrees.

### <Example>

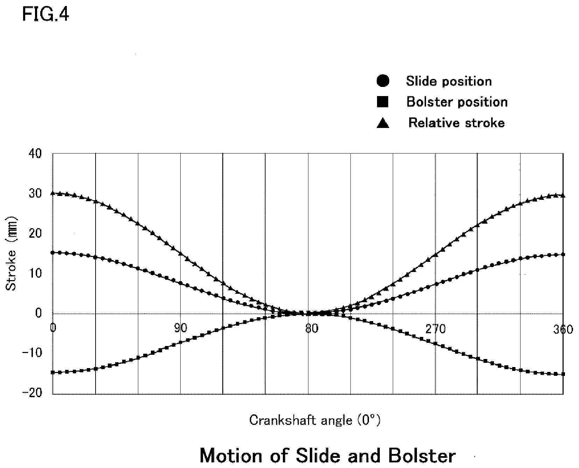

FIG. 4 shows a motion of a slide and that of a bolster in the vertical direction according to an embodiment in which the amount of eccentricity of each of upper and lower crankshafts is set to 7.5 mm. The horizontal axis represents the phase (°: degrees) of the upper crankshaft 10 and the vertical axis represents strokes (mm) in the vertical direction. The circular symbol in the figure indicates the slide 12, the square symbol indicates the bolster 13, and the triangular symbol indicates the sum of strokes of the slide and the bolster (with opposite sign), i.e., the relative stroke of the slide to the bolster.

### "4. Other"

### <Other Embodiments>

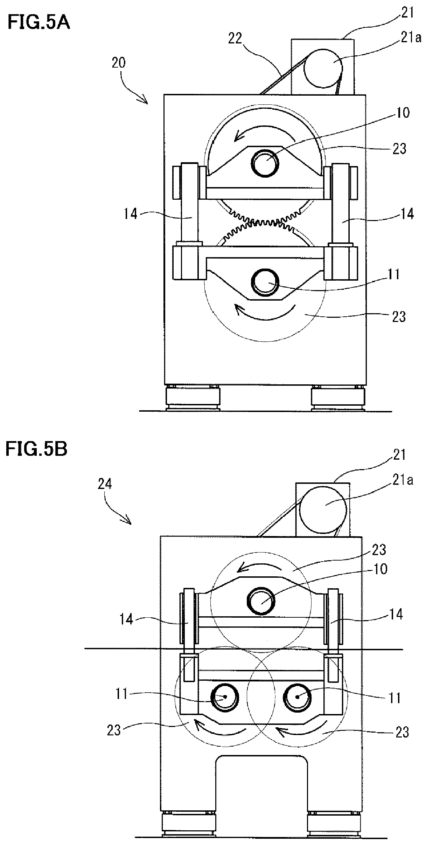

In the above-described embodiment, separate upper and lower motors are used. However, in the press machine 20 shown in FIG. 5A, the upper and lower crankshafts 10 and 11 are synchronously driven by a single motor. The motor 21 is provided on the upper surface of the crown 5 of the frame. The motor 21 is provided with a pulley 21a. A flywheel (not illustrated) is provided at one end of the upper crankshaft 10. A belt 22 is put on the flywheel and the pulley 21a. On the other hand, the upper and lower crankshafts 10 and 11 are each provided with the same gear 23 and 23. With these gears 23 and 23, transmission and synchronization of driving forces of the upper and lower crankshafts 10 and 11 are obtained. These gears 23 and 23 rotate in opposite directions. Note that the reference numeral "14" denotes a guidepost.

In the press machine 24 shown in FIG. 5B, the bolster 13 is driven by two lower crankshafts 11 and 11. These crankshafts 11 and 11 rotate in the same direction. The upper and lower crankshafts 10, 11 and 11 are each provided with the same gear 23, 23, and 23. The gear 23 of the upper crankshaft 10 meshes with the respective gears 23 and 23 of the lower crankshafts 11 and 11. Therefore, the upper and lower crankshafts 10, 11, and 11 are driven synchronously.

The above-described die height adjustment mechanisms 6 and 7 may be provided on either the slide 12 or the bolster 13.

As the above-described parallel maintaining mechanism 14, the slide 12 or the bolster 13 may be driven by two crankshafts to restrict the rotation around the crankshaft.

In this embodiment, the coil spring 15e is used in the clamp mechanism 15, but a leaf spring, an air damper, etc., may be used.

### Description of Reference Symbols

- 1:: press machine
- 2:: frame member
- 2a:: window
- 3:: bed
- 4a:: front frame
- 4b:: rear frame
- 4c, 4c:: right and left upper frame
- 4d, 4d:: right and left lower frame
- 5:: crown (upper portion)
- 6:: upper die height adjustment mechanism
- 6a:: screw member
- 6b:: nut member
- 6c:: locknut
- 6d:: adjust nut
- 6e:: locknut
- 7:: lower die height adjustment mechanism
- 7a:: screw member
- 7b:: nut member
- 7c:: locknut
- 7d:: adjust nut
- 7e:: locknut
- 8:: upper bearing block
- 8a:: upper bearing bracket
- 9:: lower bearing block
- 9a:: lower bearing bracket
- 10:: upper crankshaft
- 10a:: eccentric portion
- 11:: lower crankshaft
- 11a:: eccentric portion
- 12:: slide
- 12a:: upper die
- 12b:: guide hole
- 12c:: connecting portion
- 13:: bolster
- 13a:: lower die
- 13b:: fitting hole
- 13c:: connecting portion
- 13d:: scrap discharge port
- 14:: guidepost (parallel maintaining mechanism)
- 14a:: flange-like portion
- 15:: clamp mechanism
- 15a:: upper clamp
- 15b:: lower clamp
- 15c:: rod-like member
- 15d:: presser foot
- 15e:: spring
- 15f:: nut
- 15g:: guide hole
- 16:: temporary holding mechanism
- 17:: coupling
- 18:: servomotor
- 19:: decelerator
- 20:: press machine
- 21:: motor
- 21a:: pulley
- 22:: belt
- 23:: gear
- 24:: press machine
- L:: material feed line
- W:: material

## Claims

1. A press machine for use in progressive processing, comprising:
upper and lower crankshafts having the same amount of eccentricity and driven in opposite directions with a phase difference of 180 degrees;
a slide and a bolster rotatably connected to an eccentric part of the upper crankshaft and an eccentric part of the lower crankshafts, respectively;
a parallel maintaining mechanism configured to maintain a parallelism between the slide and the bolster; and
a clamp mechanism including an upper clamp attached to the slide and a lower clamp attached to the bolster, wherein:
the slide and the bolster move toward/away from each other and advance/retreat together in a feed direction of the material in accordance with rotational driving of the upper and lower crankshafts, and
the clamp mechanism clamps the material to be processed when the slide and the bolster move toward each other and unclamps the material forwardly fed while being clamped when the slide and the bolster move away from each other.

2. The press machine according to claim 1, wherein:
the parallel maintaining mechanism is composed of a guidepost, and
the guidepost connects the slide and the bolster, the guide post being attached to one of the slide and the bolster and slidable with respect to the other of the slide and the bolster.

3. The press machine according to claim 1 or 2, wherein the clamp mechanism is provided with an upper spring and a lower spring to absorb relative vertical motion between the slide and the bolster, and to provide clamping force for the material.

4. The press machine according to one of claims 1 to 3, wherein
the clamp mechanism is provided with adjusting mechanism for adjusting a height position for clamping the material to be processed.

5. The press machine according to one of claims 1 to 4, further comprising:
a temporary holding mechanism for temporarily holding the material which is unclamped.
